# EUROPÄISCHE PATENTANMELDUNG

(11) **EP 4 250 206 A1**
(43) Veröffentlichungstag der Anmeldung: **27.09.2023**
(21) Anmeldenummer: 23162393.5
(22) Anmeldetag: 16.03.2023
(51) Int. Cl.: G06Q 20/10, G06Q 20/32

(54) **ONLINE-EINZAHLUNG VON GELDSCHEINEN AUF BANKKONTO**

(30) Priorität: 21.03.2022 DE 102022106531
(71) Anmelder: Pekince, Veyis, 73033 Göppingen (DE)
(72) Erfinder: Pekince, Veyis, 73033 Göppingen (DE)
(74) Vertreter: Wörz, Volker Alfred

(57) **Zusammenfassung**

Die Erfindung betrifft ein Verfahren zum Einzahlen eines Geldscheins (10) auf ein Bankkonto (18) mittels eines tragbaren Geräts (20) eines Nutzers. Dem Geldschein (10) ist eine eindeutige Kennung (16) zugeordnet und an dem Geldschein (16) angebracht. Das Verfahren umfasst die nachfolgenden Schritte, die auf dem tragbaren Gerät (20) ausgeführt werden:
- Auslösen eines Erfassens und Ermitteln (102) der eindeutigen Kennung (16) des Geldscheins (10),
- Ermitteln (104) der Art (12) und/oder des Werts (14) des Geldscheins (10),
- Ermitteln (106) eines der Art (12) und dem Wert (14) des Geldscheins (10) entsprechenden monetären Betrags (40),
- Ermitteln von Daten des Bankkontos (18), auf das die Einzahlung erfolgen soll, und
- Auslösen eines Buchungsvorgangs des ermittelten monetären Betrags (40) auf das Bankkonto (18), dessen Daten ermittelt wurden.

## Beschreibung

Die vorliegende Erfindung betrifft ein Verfahren zum Einzahlen eines Geldscheins auf ein Bankkonto mittels eines tragbaren Geräts eines Nutzers, wobei dem Geldschein eine eindeutige Kennung zugeordnet und an dem Geldschein angebracht ist.

Ferner betrifft die Erfindung ein tragbares Gerät eines Nutzers zum Einzahlen eines Geldscheins auf ein Bankkonto. Schließlich betrifft die Erfindung ein Computerprogramm zur Ausführung auf einem Rechengerät, insbesondere einem Mikroprozessor oder einem Mikrocontroller, eines tragbaren Geräts.

Im Stand der Technik gibt es eine strikte Trennung zwischen einem Filialgeschäft von Banken zum Einzahlen und Abheben von Geld und einem Onlinegeschäft von Banken zum Verwalten eines Bankkontos, Tätigen von Online-Überweisungen etc. Wenn ein Bankkunde oder Nutzer jedoch reales Geld auf ein Bankkonto einzahlen möchte, ist es derzeit erforderlich, dass der Nutzer persönlich in einer Bankfiliale oder einem Banking-Center erscheint, und das Geld mithilfe eines Bankmitarbeiters oder entsprechender Automaten körperlich einzahlt. Das eingezahlte Geld wird dabei von der Bank einbehalten und so dem öffentlichen Zahlungsverkehr entzogen. Dies ist mühsam und zeitaufwendig für den Nutzer.

Aus der CN 112 308 715 A ist ein Verfahren zur Verifikation eines Zahlungsvorgangs (einer Transaktion) mit einem Geldschein bekannt, wobei in einer Datenbank sämtliche Informationen zu dem korrekten Zahlungsvorgang abgelegt sind und während des Zahlungsvorgangs Informationen über den Zahlungsvorgang mit den in der Datenbank abgelegten Informationen verglichen werden. Informationen über den Zahlungsvorgang werden durch Einscannen einer eindeutigen Kennung des Geldscheins und anhand der durchgeführten Transaktion ermittelt. Anhand eines Vergleichs und einer Auswertung von Abweichungen der Informationen über den Zahlungsvorgang und der in der Datenbank abgelegten Informationen wird auf einen illegalen Zahlungsvorgang geschlossen.

Aus der CN 102 568 082 A ist ein Verfahren zur Identifikation von gefälschten Geldscheinen bekannt, wobei die Tatsache ausgenutzt wird, dass die Seriennummern von mit der gleichen Druckplatte gedruckten gefälschten Geldscheinen gleich sind. In einer Datenbank sind die Seriennummern sämtlicher Geldscheine abgespeichert. In einer Geldzählmaschine werden die Seriennummern der gezählten Geldscheine gescannt und mit dem Inhalt der Datenbank verglichen. Falls eine Seriennummer zweimal erkannt wird, wird auf gefälschte Geldscheine geschlossen.

Ausgehend von dem beschriebenen Stand der Technik liegt der vorliegenden Erfindung die Aufgabe zugrunde, das Einzahlen eines Geldscheins auf ein Bankkonto zu erleichtern und zu vereinfachen. Insbesondere soll dies ohne einen Besuch bei einer Bank oder einem sonstigen Geldinstitut möglich sein.

Zur Lösung dieser Aufgabe schlägt die Erfindung ein Verfahren zum Einzahlen eines Geldscheins auf ein Bankkonto mit den Merkmalen des Anspruchs 1 vor. Insbesondere wird ausgehend von dem Verfahren der eingangs genannten Art vorgeschlagen, dass das Verfahren die nachfolgenden Schritte umfasst, die auf bzw. von dem tragbaren Gerät des Nutzers ausgeführt werden:
- Auslösen eines Erfassens und Ermitteln der eindeutigen Kennung des Geldscheins,
- Ermitteln der Art und/oder des Werts des Geldscheins,
- Ermitteln eines der Art und/oder dem Wert des Geldscheins entsprechenden monetären Betrags,
- Ermitteln von Daten des Bankkontos, auf das die Einzahlung erfolgen soll, und
- Auslösen eines Buchungsvorgangs des ermittelten monetären Betrags auf das Bankkonto, dessen Daten ermittelt wurden.

Die eindeutige Kennung des Geldscheins kann bspw. eine Seriennummer, ein Barcode, ein RFID-Chip o.ä. sein. Das tragbare Gerät des Nutzers ist bevorzugt als ein Smartphone ausgebildet. Auf diesem ist vorzugweise eine Applikation (sog. App) gespeichert, die zur Ausführung des erfindungsgemäßen Verfahrens programmiert ist, und das erfindungsgemäße Verfahren ausführt, wenn sie auf dem Smartphone bzw. dessen Rechengerät abgearbeitet wird. Die Erfindung hat den Vorteil, dass ein Nutzer einen beliebigen Geldschein auf ein beliebiges Bankkonto einzahlen kann, ohne dass es dazu eines Besuchs bei einer Bank oder einem sonstigen Geldinstitut bedarf. Auf diese Weise wird das Filialgeschäft von Banken mit deren Onlinegeschäft verschmolzen. Selbst das Einzahlen von Geld kann nunmehr bequem von zu Hause aus online erfolgen.

Gemäß einer vorteilhaften Weiterbildung der Erfindung wird vorgeschlagen, dass die ermittelte eindeutige Kennung des Geldscheins in einer Datenbank vermerkt wird. Damit kann der auf das Bankkonto eingezahlte Geldschein aus dem Zahlungsverkehr genommen werden und steht nicht mehr als wirksames Zahlungsmittel zur Verfügung. Das setzt allerdings voraus, dass sämtliche Geschäfte, Läden etc. auf die Datenbank Zugriff haben und darauf zugreifen müssen, bevor sie eine Zahlung mit einem bestimmten Geldschein akzeptieren können. Erst nachdem der Geldschein aufgrund der Datenbankabfrage als wirksames Zahlungsmittel bestätigt wurde, kann die mit dem Geldschein getätigte Zahlung akzeptiert werden.

Diese "virtuelle" Entnahme des Geldscheins aus dem Zahlungsverkehr hat zudem den Vorteil, dass diese jederzeit wieder rückgängig gemacht werden kann. So wäre es bspw. denkbar, dass der Nutzer einen der Art und dem Wert des Geldscheins entsprechenden monetären Betrag an eine Bank überweist und im Gegenzug der bisher ungültige Geldschein, den der Nutzer noch in Händen hält, mit seiner eindeutigen Kennung wieder zum Zahlungsverkehr zugelassen und als wirksames Zahlungsmittel akzeptiert wird. Das Akzeptieren als wirksames Zahlungsmittel kann bspw. durch einen entsprechenden Eintrag in einer entsprechenden Datenbank oder durch Löschen eines entsprechenden Eintrags aus einer entsprechenden Datenbank erfolgen. Dieser Vorgang entspricht sozusagen einem online Abheben von Geld von einem Bankkonto. Dies führt zu einem weiteren Verschmelzen des Filialgeschäfts von Banken und des Onlinegeschäfts, da der Nutzer nunmehr - sofern er zuhause noch unwirksame Geldscheine hat - sogar bequem von zu Hause aus online Geld von seinem Konto abheben kann und dann einen echten Geldschein, der als Zahlungsmittel zugelassen ist, in Händen hält, ohne dass er das Haus verlassen und bspw. eine Bankfiliale oder ein Kundencenter einer Bank betreten musste.

Bei der Datenbank handelt es sich vorzugsweise um eine über das Internet zugängliche Datenbank. Es ist denkbar, dass für den Zugang zu der Datenbank Nutzungs- oder Lizenzgebühren erhoben werden. Diese Gebühren können dem Betreiber der Datenbank und/oder dem Dienstleister zugutekommen, der das erfindungsgemäße Verfahren zur Verfügung stellt, bspw. in der Form eines Computerprogramms oder einer App.

Vorzugsweise umfasst das Vermerken der eindeutigen Kennung des Geldscheins in der Datenbank ein Löschen der Kennung aus einer Datenbank, die ursprünglich die eindeutigen Kennungen von allen in einer definierten geografischen Region in Umlauf befindlichen Geldscheinen der ermittelten Art und des ermittelten Werts enthielt. In diesem Fall wäre die Datenbank also bspw. eine nationale (in Deutschland) oder regionale (im Euro-Währungsraum) Datenbank mit den eindeutigen Kennungen aller in der entsprechenden Region im Umlauf befindlicher und als wirksame Zahlungsmittel zugelassener Geldscheine. Zu Beginn des erfindungsgemäßen Verfahrens sind in der Datenbank also die eindeutigen Kennungen von sämtlichen Geldscheinen einer bestimmten Art bzw. eines bestimmten Werts enthalten, da sämtliche in Umlauf befindliche Geldscheine zu Beginn als wirksames Zahlungsmittels akzeptiert sind. Es ist denkbar, dass die Datenbank auch die eindeutigen Kennungen von Geldscheinen verschiedener Arten und/oder verschiedener Werte umfasst. Bevor Geschäfte, Läden, etc. eine Zahlung mit einem bestimmten Geldschein akzeptieren können, greifen sie auf die Datenbank zu und lassen überprüfen, ob die eindeutige Kennung des Geldscheins in der Datenbank enthalten ist oder nicht bzw. als wirksames Zahlungsmittel zugelassen ist.

Alternativ ist es aber auch denkbar, dass das Vermerken der eindeutigen Kennung des Geldscheins in der Datenbank ein Abspeichern der Kennung in einer Datenbank umfasst, in der nach und nach sämtliche auf ein Bankkonto eingezahlte Geldscheine der ermittelten Art und/oder des ermittelten Werts abgespeichert werden. Die Datenbank ist zu Beginn des erfindungsgemäßen Verfahrens leer, da keiner der in Umlauf befindlichen Geldscheine aus dem Umlauf herausgenommen und nicht mehr als wirksames Zahlungsmittel akzeptiert ist. Erst nach und nach, wenn einzelne Geldscheine nach dem erfindungsgemäßen Verfahren auf Bankkonten eingezahlt werden, wird die Datenbank mit den eindeutigen Kennungen dieser Geldscheine gefüllt, da sie aus dem Umlauf herausgenommen wurden und nicht mehr als wirksames Zahlungsmittel akzeptiert werden. Bevor Geschäfte, Läden, etc. eine Zahlung mit einem bestimmten Geldschein akzeptieren können, greifen sie auf die Datenbank zu und stellen sicher, dass die eindeutige Kennung des Geldscheins nicht in der Datenbank enthalten bzw. nicht als nicht mehr wirksames Zahlungsmittel vermerkt ist.

Je nach Ausgestaltung der eindeutigen Kennung des Geldscheins wird gemäß einer bevorzugten Ausführungsform der Erfindung vorgeschlagen, dass das Erfassen der eindeutigen Kennung des Geldscheins ein optisches Scannen zumindest des Teils des Geldscheins, auf dem die eindeutige Kennung aufgebracht ist, oder ein Empfangen der in einem Funksignal codierten eindeutigen Kennung umfasst. Das optische Scannen der eindeutigen Kennung kann bspw. mittels einer Kamera erfolgen, die Bestandteil eines als Smartphone ausgebildeten tragbaren Geräts des Nutzers ist. Dabei kann eine in Reinschrift auf den Geldschein aufgebrachten Zahlen- und/oder Buchstabenkombination oder aber ein auf den Geldschein aufgebrachter Barcode oder QR-Code eingescannt werden. Das Funksignal mit der darin codierten eindeutigen Kennung kann bspw. von einem Transponder eines in den Geldschein eingebrachten oder auf den Geldschein aufgebrachten RFID-Tags auf Veranlassung des tragbaren Geräts des Nutzers ausgesandt werden. Dies hat den Vorteil, dass das erfindungsgemäße Verfahren unabhängig von der Art der Codierung der eindeutigen Kennung der Geldscheine in einer bestimmten Region funktioniert.

Es ist ferner denkbar, dass das Ermitteln der Art des Geldscheins ein Ermitteln eines Landes oder einer Region, in dem/ der der Geldschein als Zahlungsmittel akzeptiert ist, umfasst. Alternativ oder zusätzlich kann das Ermitteln der Art des Geldscheins eine Detektion umfassen, ob der Geldschein echt ist oder ob es sich um eine Fälschung handelt. Die Detektion kann anhand einer Überprüfung bzw. Verifikation von charakteristischen Merkmalen (z.B. Metallstreifen, Wasserzeichen, Prägungen, Reflexionen, Lichtbrechung, transparente Fenster etc.) des Geldscheins erfolgen. Dies hat den Vorteil, dass der Nutzer unmittelbar beim online Einzahlen des Geldscheins auf das Bankkonto die Bestätigung erhält, dass der Geldschein echt ist. Dies ist insbesondere bei teureren Barverkäufen, bspw. dem Verkauf eines Gebrauchtwagens, vorteilhaft, da der Verkäufer Sicherheit über die Echtheit der erhaltenen Geldscheine erhält und das erhaltene Bargeld gleich auf sein Bankkonto einzahlen kann. Die erhaltenen Geldscheine sind dann nicht mehr als gültiges Zahlungsmittel zugelassen, so dass die Gefahr eines Überfalls auf den Verkäufer trotz der großen Menge an Bargeld, die er soeben erhalten hat, deutlich reduziert werden kann.

Besonders bevorzugt erfolgt das Ermitteln der Art und/oder des Werts des Geldscheins anhand der eindeutigen Kennung des Geldscheins, die im Rahmen einer Anfrage an eine Datenbank gesandt wird, die eindeutige Kennungen von allen in einer definierten geografischen Region in Umlauf befindlichen Geldscheinen und die diesen jeweils zugeordnete Arte und/oder den jeweils zugeordneten Wert enthält, und die als Antwort auf die Datenbankanfrage in Abhängigkeit von der an die Datenbank gesandten eindeutigen Kennung die Art und/oder den Wert des Geldscheins zurückgibt. Bei dieser Datenbank kann es sich um die gleiche Datenbank handeln, die auch die eindeutigen Kennungen der als Zahlungsmittel zugelassenen Geldscheine enthält.

Gemäß einer weiteren bevorzugten Ausführungsform wird vorgeschlagen, dass das Ermitteln der Daten des Bankkontos, auf das die Einzahlung erfolgen soll, das Einlesen der Daten des Bankkontos des Nutzers oder mittels des tragbaren Geräts des Nutzers die Eingabe von Daten des Bankkontos eines Dritten umfasst. Die Daten des eigenen Bankkontos des Nutzers können bereits auf seinem tragbaren Gerät abgespeichert und von dort einfach eingelesen werden. Die Daten des Bankkontos eines Dritten können über eine Benutzerschnittstelle (sog. User Interface, UI) des tragbaren Geräts manuell eingegeben werden. Alternativ ist es auch denkbar, dass die Daten des Bankkontos des Dritten mittels eines Barcodes oder eines QR-Codes mit Hilfe des tragbaren Geräts eingelesen und auf Grundlage der eingelesenen Daten automatisch eingegeben werden. Somit ist es möglich, mit dem erfindungsgemäßen Verfahren den Geldschein auf das eigene Bankkonto des Nutzers oder auf ein Bankkonto eines Dritten, bspw. zum Bezahlen einer entsprechenden Rechnung, die der Nutzer von dem Dritten erhalten hat, zu bezahlen. In Ländern, wo es üblich ist, bspw. Strom-, Gas-, Wasser- oder Telefonrechnungen durch Bareinzahlung zu bezahlen, kann mit dem erfindungsgemäßen Verfahren eine online-Überweisung aus Barmitteln erfolgen. Ebenso wäre es denkbar, dass bspw. Nutzer ohne eigenes Bankkonto einen Prepaid-Vertrag für ihr Mobiltelefon aus Barmitteln aufzuladen.

Besonders bevorzug ist es, wenn sämtliche Kommunikation mit einer oder mehreren Datenbanken sowie das Auslösen des Buchungsvorgangs des ermittelten monetären Betrags auf das Bankkonto über eine Internetverbindung zwischen dem tragbaren Gerät des Nutzers und der mindestens einen Datenbank bzw. einem Bankserver erfolgt. Zu diesem Zweck verfügt das tragbare Gerät über ein Kommunikationsmodul, welches es dem tragbaren Gerät ermöglicht, eine Internetverbindung herzustellen und über diese Daten zu senden und/oder zu empfangen. Dieses Kommunikationsmodul ist bspw. ein Funkmodul eines mobilen Telekommunikationsnetzes, eines WiFi-Netzwerks oder eines Bluetooth-Netzwerks, wie es bspw. bei einem Smartphone vorhanden ist. Der Zugang zum Internet erfolgt bevorzugt über einen Zugangsserver, auf den das Kommunikationsmodul des tragbaren Geräts über die Funkverbindung Zugriff hat. In diesem Sinne wird ferner vorgeschlagen, dass mittels des tragbaren Geräts des Nutzers über eine Funkverbindung auf das Internet und die mindestens eine Datenbank bzw. den Bankserver zugegriffen wird. Diese Ausführungsform hat den Vorteil, dass das tragbare Gerät völlig autark ausgebildet und zur Realisierung des erfindungsgemäßen Verfahrens an beliebigen Orten eingesetzt werden kann, sofern dort der Aufbau einer Funkverbindung möglich ist.

Das erfindungsgemäße Verfahren zum Einzahlen eines Geldscheins auf ein Bankkonto kann als eine von mehreren möglichen Zahlungsmethoden beim Online-Shopping angeboten und vom Käufer ausgewählt werden. Dabei bezahlt der Nutzer bzw. Online-Käufer mit einem in seinem Zugriffsbereich befindlichen, körperlich vorhandenen Geldschein, und der ermittelte monetäre Betrag wird ganz oder teilweise auf das Bankkonto des Online-Shops überwiesen. Damit ist der Online-Kaufvorgang abgeschlossen und die gekaufte Ware oder Dienstleistung kann an den Kunden versandt oder diesem zur Verfügung gestellt werden. Ein Teil des ermittelten monetären Betrags, der den Kaufpreis übersteigt, kann auf das Bankkonto des Nutzers überwiesen werden. Nach erfolgten Einzahlen auf das Bankkonto des Online-Shops kann der Geldschein als unwirksam deklariert werden, bspw. indem seine eindeutige Kennung in einer Datenbank vermerkt wird.

Das erfindungsgemäße tragbare Gerät eines Nutzers ist ausgebildet, das erfindungsgemäße Verfahren auszuführen. In diesem Sinne wird insbesondere vorgeschlagen, dass das tragbare Gerät ein Rechengerät, insbesondere in der Form eines Mikroprozessors oder eines Mikrocontrollers, umfasst, auf dem ein Computerprogramm ausführbar ist, das zur Realisierung des erfindungsgemäßen Verfahrens programmiert ist, und das erfindungsgemäße Verfahren realisiert, wenn es auf dem Rechengerät ausgeführt wird. Besonders bevorzugt ist das tragbare Gerät als ein Smartphone ausgebildet.

Das erfindungsgemäße Computerprogramm ist zur Realisierung des erfindungsgemäßen Verfahrens programmiert, und realisiert das erfindungsgemäße Verfahren, wenn es auf dem Rechengerät des tragbaren Geräts des Nutzers ausgeführt wird. Besonders bevorzugt ist das Computerprogramm als eine auf einem Smartphone ausführbare App ausgebildet.

Weitere Merkmale und Vorteile der Erfindung werden nachfolgend unter Bezugnahme auf die Figuren näher erläutert. Dabei können einzelnen in den Figuren gezeigte Merkmale auch für sich alleine erfindungswesentlich sein, selbst wenn dies in den Figuren nicht gezeigt und in der Beschreibung nicht ausdrücklich erwähnt ist. Ferner ist es denkbar, dass eine Kombination mehrerer in einer oder mehreren Figuren gezeigter Merkmale erfindungswesentlich ist, selbst wenn diese Kombination für sich alleine in den Figuren nicht gezeigt und in der Beschreibung nicht ausdrücklich erwähnt ist. Es zeigen:
- Fig. 1: eine schematische Ansicht einer Anordnung zur Realisierung des erfindungsgemäßen Verfahrens;
- Fig. 2: eine schematische Ansicht einer Anordnung zur Realisierung eines Einkaufs in einem Laden oder Geschäft mittels eines Geldscheins;
- Fig. 3: eine schematische Ansicht eines erfindungsgemäßen tragbaren Geräts; und
- Fig. 4: ein Ablaufdiagramm des erfindungsgemäßen Verfahrens.

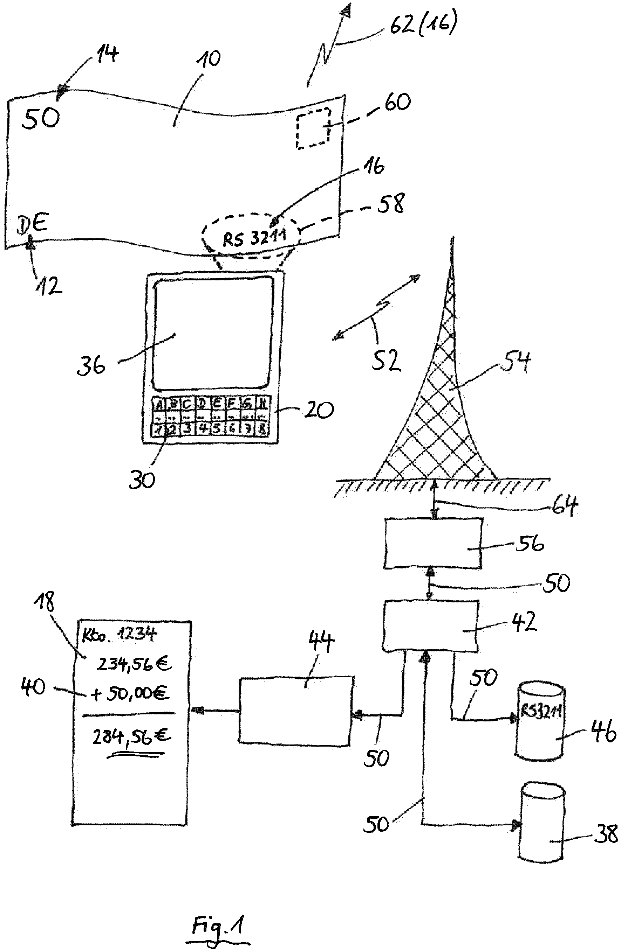

In Fig. 1 ist ein Geldschein eines Nutzers dargestellt und mit dem Bezugszeichen 10 bezeichnet. In diesem Beispiel handelt es sich um einen deutschen Geldschein (Länderkennung 12 "DE") im Wert von 50 Euro (Wert 14 "50") mit einer eindeutigen Kennung 16 in der Form einer Seriennummer ("RS 3211 "). Jeder Geldschein 10, der in der betreffenden Region, in dem vorliegenden Fall im Euro-Währungsraum, in Umlauf ist, ist durch die Kennung 16 eindeutige identifizierbar. Jeder Geldschein 10 hat seine eigene Kennung 16.

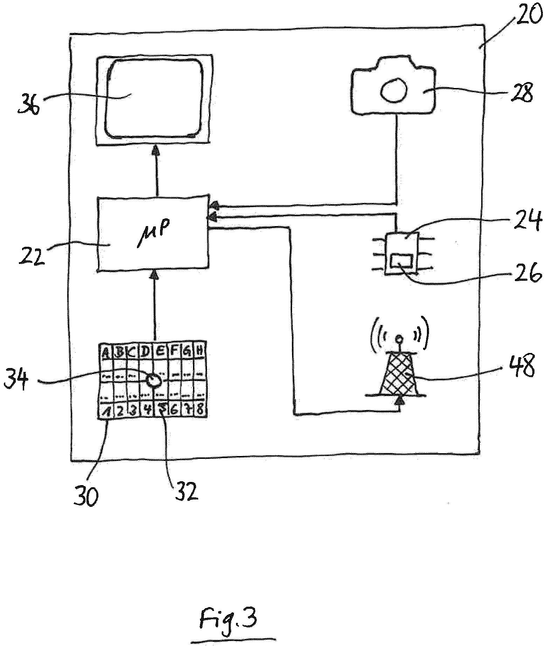

Die vorliegende Erfindung betrifft ein Verfahren zum Einzahlen eines Geldscheins 10 auf ein Bankkonto 18 mittels eines tragbaren Geräts 20 eines Nutzers. Das Bankkonto 18 wird bei einer beliebigen Bank oder einem beliebigen Geldinstitut geführt. Es kann sich um ein Bankkonto mit Online-Funktionalität oder um ein herkömmliches Bankkonto ohne Online-Funktionalität handeln. Der schematische Aufbau des tragbaren Geräts 20 ist beispielhaft in Fig. 3 gezeigt. In dem Beispiel ist das Gerät 20 als ein Smartphone ausgebildet.

Das tragbare Gerät 20 weist ein Rechengerät 22 in der Form eines Mikroprozessors auf. Selbstverständlich kann das Rechengerät auch als ein Mikrocontroller o.ä. ausgebildet sein. Ferner umfasst das Gerät 20 ein Speicherelement 24, bspw. in der Form eines ROM, EPROM oder EEPROM, auf dem ein Computerprogramm 26 abgespeichert ist, das zur Ausführung des erfindungsgemäßen Verfahrens programmiert ist und das erfindungsgemäße Verfahren realisiert, wenn es auf dem Rechengerät 22 abgearbeitet wird. Zur Abarbeitung wird das Computerprogramm 26 aus dem Speicherelement 24 in das Rechengerät 22 übertragen.

Ferner umfasst das tragbare Gerät 20 eine Kamera 28 die zum optischen Scannen zumindest des Teils 58 des Geldscheins 10 genutzt werden kann, wo die eindeutige Kennung 16 des Geldscheins 10 aufgebracht ist. Darüber hinaus kann das Gerät 20 eine Benutzerschnittstelle 30 zur Eingabe aufweisen, die bspw. eine Tastatur 32 und/oder einen Trackball 34 umfasst, und die zur Eingabe von Informationen in das Gerät 20 durch den Nutzer ausgebildet ist. Ferner ist eine Benutzerschnittstelle 36 zur Ausgabe vorgesehen, die bspw. als ein Bildschirm ausgebildet ist, und die zur Ausgabe von Informationen an den Nutzer des Geräts 20 dient. Der Bildschirm 36 ist bevorzugt als ein LED-, OLED-, AMOLED-Bildschirm ausgebildet. Die Tastatur 32 und/oder der Trackball 34 kann hardwaremäßig oder virtuell auf dem Bildschirm 36 des tragbaren Geräts 20 realisiert sein. In diesem Fall wäre der Bildschirm 36 berührungssensitiv ausgebildet.

Anstelle einer auf den Geldschein 10 aufgedruckten optisch erfassbaren eindeutigen Kennung 16 kann die eindeutige Kennung 16 auch in einem Funksignal 62 codiert sein. Das Funksignal 62 mit der darin codierten eindeutigen Kennung 16 kann bspw. von einem Transponder eines in den Geldschein 10 eingebrachten oder auf den Geldschein 10 aufgebrachten RFID-Tags 60 auf Veranlassung des tragbaren Geräts 20 des Nutzers ausgesandt werden. Das Funksignal 62 bzw. die eindeutige Kennung 16 könnte von einem geeigneten Funkempfänger (bspw. einem RFID-Lesegerät), das Bestandteil des tragbaren Geräts 20 ist, eingelesen werden.

Das Erfassen einer eindeutigen Kennung 16 eines Geldscheins durch die Kamera 28 kann durch das Rechengerät 22 ausgelöst werden. Das Auslösen kann automatisch im Rahmen der Abarbeitung des Computerprogramms 26 auf dem Rechengerät 22 oder aber manuell durch Drücken einer entsprechenden Taste 32 erfolgen.

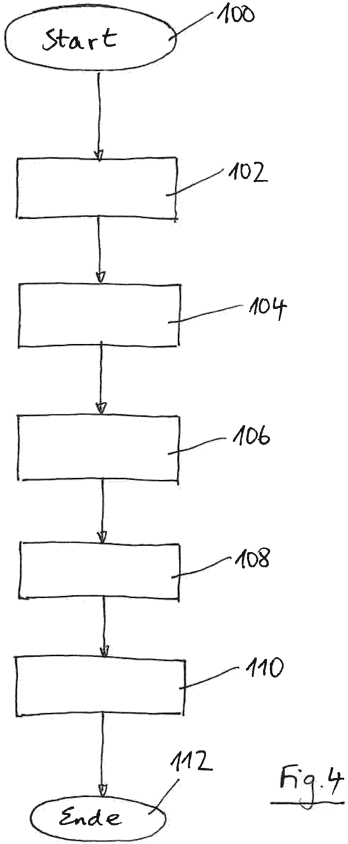

Das erfindungsgemäße Verfahren wird auf dem tragbaren Gerät 20 ausgeführt und beginnt in einem Funktionsblock 100 (vgl. Fig. 4). Dies entspricht bspw. einem Aufruf des Computerprogramms 26 auf dem Gerät 20 oder aber dem Drücken einer entsprechenden Taste 32 des Geräts 20 im Rahmen der Abarbeitung des Computerprogramms 26. Anschließend wird in einem Funktionsblock 102 das Erfassen der eindeutigen Kennung 16 eines Geldscheins 10 ausgelöst und die erfasste eindeutige Kennung 16 ermittelt. Zu diesem Zweck wird bspw. die Kamera 28 durch das Rechengerät 22 bzw. durch das darauf ablaufende Computerprogramm 26 angesteuert und zur Aufnahme eines Fotos veranlasst. Das aufgenommene Foto wird zur weiteren Verarbeitung von der Kamera 28 an das Rechengerät 22 übertragen. Die weitere Verarbeitung kann die Auswertung des Fotos und die Ermittlung der eindeutigen Kennung 16 des Geldscheins 10, bspw. durch Texterkennung (OCR), umfassen.

Darüber hinaus wird in einem Funktionsblock 104 die Art und/oder der Wert des Geldscheins 10 ermittelt. Dies kann dadurch erfolgen, dass mittels der Kamera 28 die Länderkennung 12 und/oder der Wert 14 des Geldscheins 10 erfasst und in dem Rechengerät 22 ausgewertet und so die Art und/oder der Wert des Geldscheins 10 ermittelt wird. Alternativ kann dies auch dadurch erfolgen, dass die bereits ermittelte eindeutige Kennung 16 des Geldscheins 10 im Rahmen einer Anfrage an eine Datenbank 38 übertragen wird, in der die Kennungen 16 sämtlicher in Umlauf befindlicher Geldscheine 10 mit den dazugehörigen Arten und/oder Werten abgespeichert sind. Abhängig von der empfangenen Kennung 16 übermittelt die Datenbank 38 als Antwort auf die Suchanfrage die Art und/oder den Wert des Geldscheins 10 an das Rechengerät 22.

Dann wird in einem Funktionsblock 106 ein der Art und/oder dem Wert des Geldscheins 10 entsprechender monetärer Betrag 40 ermittelt. Bei einem Geldschein 10 aus einem Land des Euro-Währungsraums kann dazu einfach der Wert 14 des Geldscheins 10 herangezogen werden. Bei einem Geldschein 10 aus einem Land gemäß dem Ländercode 12 außerhalb des Euro-Währungsraums kann dazu ein tagesaktueller Umrechnungskurs herangezogen werden und mit dem Wert 14 des Geldscheins 10 multipliziert werden. Es ist denkbar, dass sich der monetäre Betrag 40 nach Abzug einer Bearbeitungspauschale ergibt, welche dem Dienstleister zugutekommt, der den Service des Online-Einzahlens von Geldscheinen 10 gemäß der vorliegenden Erfindung zur Verfügung stellt, bspw. dem Programmierer des Computerprogramms 26.

In einem Funktionsblock 108 werden dann Daten des Bankkontos 18 ermittelt, auf das die Einzahlung erfolgen soll. Dies kann bspw. das Einlesen der Daten des Bankkontos 18 des Nutzers umfassen. Alternativ kann dies auch die Eingabe von Daten des Bankkontos 18 eines Dritten mittels des tragbaren Geräts 20 des Nutzers umfassen. Die Eingabe der Daten des Bankkontos 18 eines Dritten durch den Nutzer kann bspw. über die Benutzerschnittstelle 30 zur Eingabe erfolgen.

Abschließend wird in einem Funktionsblock 110 ein Buchungsvorgang ausgelöst, bei dem der der ermittelte monetäre Betrag 40 auf dem Bankkonto 18, dessen Daten ermittelt wurden, gutgeschrieben wird. Dies erfolgt bspw. dadurch, dass das Rechengerät 22 einen entsprechenden Befehl an einen Server 42 des Dienstleisters sendet, der den Service des Online-Einzahlens von Geldscheinen 10 gemäß der vorliegenden Erfindung zur Verfügung stellt. Der Server 42 übermittelt dann einen entsprechenden Befehl an einen Bankserver 44 der Bank, wo das Bankkonto 18, dessen Daten ermittelt wurden, geführt wird. Der Server 42 ist bevorzugt als ein Internet-Server ausgebildet. In einem Funktionsblock 112 ist das Verfahren beendet. Die Abarbeitung der verschiedenen Schritte 102 bis 108 des Verfahrens muss nicht notwendigerweise streng in der angegebenen Reihenfolge erfolgen, vielmehr sind Abweichungen von der Reihenfolge denkbar.

Es ist bevorzugt, dass die ermittelte eindeutige Kennung 16 des Geldscheins 10 in einer Datenbank 46 vermerkt wird, wenn der ermittelte monetäre Betrag 40 des Geldscheins 10 auf dem Bankkonto 18 gutgeschrieben wurde. Damit kann der auf das Bankkonto 18 eingezahlte Geldschein 10 virtuell aus dem Zahlungsverkehr genommen werden und steht nicht mehr als wirksames Zahlungsmittel zur Verfügung.

Das Vermerken der eindeutigen Kennung 16 des Geldscheins 10 in der Datenbank 46 kann ein Löschen der Kennung 16 aus einer Datenbank 46 umfassen, wenn die Datenbank 46 zu Beginn des Verfahrens die eindeutigen Kennungen 16 von allen in einer definierten geografischen Region, z.B. dem Euro-Währungsraum, in Umlauf befindlichen Geldscheinen 10 der ermittelten Art und des ermittelten Werts enthält, die noch als Zahlungsmittel akzeptiert sind, weil sie bspw. noch nicht auf ein Bankkonto 18 eingezahlt worden sind.

Alternativ ist es aber auch denkbar, dass das Vermerken der eindeutigen Kennung 16 des Geldscheins 10 in der Datenbank 46 ein Abspeichern der Kennung 16 in der Datenbank 46 umfasst, die zu Beginn des Verfahrens leer ist. Erst nach und nach, wenn einzelne Geldscheine 10 nach dem erfindungsgemäßen Verfahren auf Bankkonten 18 eingezahlt worden sind, wird die Datenbank 46 mit den eindeutigen Kennungen 16 dieser Geldscheine 10 gefüllt, da diese aus dem Umlauf herausgenommen und nicht mehr als wirksames Zahlungsmittel akzeptiert werden.

Besonders bevorzugt ist es, wenn sämtliche Kommunikation des tragbaren Geräts 20 mit einer oder mehreren Datenbanken 38, 46 sowie das Auslösen des Buchungsvorgangs des ermittelten monetären Betrags 40 auf dem Bankkonto 18 über eine Internetverbindung zwischen dem tragbaren Gerät 20 des Nutzers und der mindestens einen Datenbank 38, 46 bzw. dem Bankserver 44 erfolgt. Zu diesem Zweck verfügt das tragbare Gerät 20 über ein Kommunikationsmodul 48, welches es dem tragbaren Gerät 20 ermöglicht, eine Internetverbindung herzustellen und über diese Daten zu senden und/oder zu empfangen.

Dieses Kommunikationsmodul 48 ist vorzugsweise ein Funkmodul eines mobilen Telekommunikationsnetzes, eines WiFi-Netzwerks oder eines Bluetooth-Netzwerks, wie es bspw. bei neueren Smartphones standardmäßig vorhanden ist. Dabei greift das tragbare Gerät 20 über eine Funkverbindung 52 auf das Internet 50 und die mindestens eine Datenbank 38, 46 bzw. den Bankserver 44 zu. Die Funkverbindung 52 wird zwischen dem Kommunikationsmodul 48 und einer Antenne 54 des Funknetzes aufgebaut. Die Antenne 54 ist über eine Verbindung 64 mit einem Zugangsserver 56 verbunden, sodass über diesen der Zugang zum Internet 50 erfolgen kann. Die Internetverbindung zwischen dem tragebaren Gerät 20 und der Datenbank 38, 46 bzw. dem Bankserver 44 umfasst bspw. die Funkverbindung 52, die Verbindung 64, und das Internet 50.

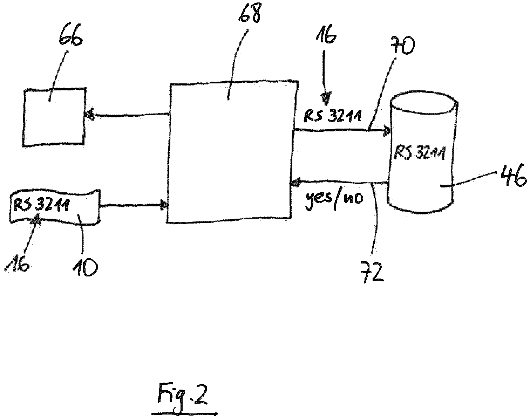

Bei dem erfindungsgemäßen Verfahren ist es so, dass ein Nutzer einen Geldschein 10 körperlich in Händen halten kann, der jedoch nicht mehr als gültiges Zahlungsmittel zugelassen ist, da er bereits online auf ein Bankkonto 18 eingezahlt worden ist. Damit ist der Geldschein 10 dem öffentlichen Zahlungsverkehr entzogen. Dies kann bspw. in einer Datenbank 46 vermerkt sein. Dies macht neue Abläufe beim Barverkauf von Waren oder Dienstleistungen 66 in einem Laden oder Geschäft 68 erforderlich, die am Beispiel der Fig. 2 näher erläutert werden.

Wenn ein Nutzer mit einem Geldschein 10 in einen Laden oder ein Geschäft 68 kommt, um eine Ware oder Dienstleistung 66 zu erwerben, wird der Laden bzw. das Geschäft 68 zunächst eine Anfrage 70 an die Datenbank 46 stellen, um zu erfahren, ob der Geldschein 10 mit der eindeutigen Kennung 16 gültiges Zahlungsmittel ist oder nicht. Die eindeutige Kennung 16 kann in dem Laden bzw. dem Geschäft 68 manuell durch den Verkäufer eingegeben oder aber mithilfe einer entsprechenden Vorrichtung automatisch eingescannt werden.

Die Datenbank 46 wird eine Antwort 72 auf die Suchanfrage 70 an den Laden bzw. das Geschäft 68 zurücksenden, welche die Information enthält, ob der Geldschein 10 ein gültiges Zahlungsmittel ist oder nicht ("yes"/ "no"). Je nach dem Inhalt der Antwort 72 kann der Verkäufer den Verkauf der Ware oder Dienstleistung 66 tätigen oder nicht.

## Patentansprüche

1. Verfahren zum Einzahlen eines Geldscheins (10) auf ein Bankkonto (18) mittels eines tragbaren Geräts (20) eines Nutzers, wobei dem Geldschein (10) eine eindeutige Kennung (16) zugeordnet und an dem Geldschein (16) angebracht ist, das Verfahren umfassend die nachfolgenden Schritte, die auf dem tragbaren Gerät (20) ausgeführt werden:
- Auslösen eines Erfassens und Ermitteln (102) der eindeutigen Kennung (16) des Geldscheins (10),
- Ermitteln (104) der Art (12) und/oder des Werts (14) des Geldscheins (10),
- Ermitteln (106) eines der Art (12) und dem Wert (14) des Geldscheins (10) entsprechenden monetären Betrags (40),
- Ermitteln von Daten des Bankkontos (18), auf das die Einzahlung erfolgen soll, und
- Auslösen eines Buchungsvorgangs des ermittelten monetären Betrags (40) auf das Bankkonto (18), dessen Daten ermittelt wurden.

2. Verfahren nach Anspruch 1, **dadurch gekennzeichnet, dass** die ermittelte eindeutige Kennung (16) des Geldscheins (10) in einer Datenbank (46) vermerkt wird.

3. Verfahren nach Anspruch 2, **dadurch gekennzeichnet, dass** das Vermerken der eindeutigen Kennung (16) des Geldscheins (10) entweder ein Löschen der Kennung aus einer Datenbank (46), die ursprünglich die eindeutigen Kennungen von allen in einer definierten geografischen Region in Umlauf befindlichen Geldscheinen (10) der ermittelten Art und des ermittelten Werts enthielt, oder ein Abspeichern der eindeutigen Kennung (16) in einer Datenbank (46) umfasst, in der nach und nach die eindeutigen Kennungen (16) sämtlicher auf einem Bankkonto (18) eingezahlter Geldscheine (10) der ermittelten Art und des ermittelten Werts abgespeichert werden.

4. Verfahren nach einem der vorhergehenden Ansprüche, **dadurch gekennzeichnet, dass** das Erfassen der eindeutigen Kennung (16) des Geldscheins (10) ein optisches Scannen zumindest des Teils (58) des Geldscheins (10), auf dem die eindeutige Kennung (16) aufgebracht ist, oder ein Empfangen der in einem Funksignal (62) codierten eindeutigen Kennung (16) umfasst.

5. Verfahren nach einem der vorhergehenden Ansprüche, **dadurch gekennzeichnet, dass** das Ermitteln der Art des Geldscheins (10) ein Ermitteln eines Landes oder einer Region (12), in dem/ der der Geldschein (10) als Zahlungsmittel akzeptiert ist, und/ oder eine Detektion umfasst, ob der Geldschein (10) echt oder eine Fälschung ist.

6. Verfahren nach einem der vorhergehenden Ansprüche, **dadurch gekennzeichnet, dass** das Ermitteln der Art (12) und/oder des Werts (14) des Geldscheins (10) anhand der eindeutigen Kennung (16) des Geldscheins (10) erfolgt, die im Rahmen einer Anfrage an eine Datenbank (38) gesandt wird, die eindeutige Kennungen (16) von allen in einer definierten geografischen Region in Umlauf befindlichen Geldscheinen (10) und die diesen jeweils zugeordnete Art (12) und/oder den jeweils zugeordneten Wert (14) enthält, und die als Antwort auf die Datenbankanfrage in Abhängigkeit von der an die Datenbank (38) gesandten eindeutigen Kennung (16) die Art (12) und/oder den Wert (14) des Geldscheins (10) zurückgibt.

7. Verfahren nach einem der vorhergehenden Ansprüche, **dadurch gekennzeichnet, dass** das Ermitteln der Daten des Bankkontos (18), auf das die Einzahlung erfolgen soll, das Einlesen der Daten des Bankkontos (18) des Nutzers oder mittels des tragbaren Geräts (20) des Nutzers die Eingabe von Daten des Bankkontos (18) eines Dritten umfasst.

8. Verfahren nach einem der vorhergehenden Ansprüche, **dadurch gekennzeichnet, dass** sämtliche Kommunikation mit einer oder mehreren Datenbanken (38, 46) sowie das Auslösen des Buchungsvorgangs des ermittelten monetären Betrags (40) auf das Bankkonto (18) über eine Internetverbindung zwischen dem tragbaren Gerät (20) des Nutzers und der mindestens einen Datenbank (38, 46) bzw. einem Bankserver (44) erfolgt.

9. Verfahren nach Anspruch 8, **dadurch gekennzeichnet, dass** mittels des tragbaren Geräts (20) des Nutzers über eine Funkverbindung (52) auf das Internet (50) und die mindestens eine Datenbank (38, 46) bzw. den Bankserver (44) zugegriffen wird.

10. Tragbares Gerät (20) eines Nutzers zum Einzahlen eines Geldscheins (10) auf ein Bankkonto (18), wobei das Gerät (20) ausgebildet ist, ein Verfahren nach einem der vorhergehenden Ansprüche auszuführen.

11. Tragbares Gerät (20) nach Anspruch 10, **dadurch gekennzeichnet, dass** das tragbare Gerät (20) ein Rechengerät (22), insbesondere in der Form eines Mikroprozessors oder eines Mikrocontrollers, umfasst, auf dem ein Computerprogramm (26) ausführbar ist, das zur Realisierung eines Verfahrens nach einem der Ansprüche 1 bis 9 programmiert ist und das Verfahren ausführt, wenn es auf dem Rechengerät (22) ausgeführt wird.

12. Tragbares Gerät (20) nach Anspruch 10 oder 11, **dadurch gekennzeichnet, dass** das tragbare Gerät (20) als ein Smartphone ausgebildet ist.

13. Computerprogramm (26) zur Ausführung auf einem Rechengerät (22), insbesondere einem Mikroprozessor oder einem Mikrocontroller, eines tragbaren Geräts (20), wobei das Computerprogramm (26) zur Realisierung eines Verfahrens nach einem der Ansprüche 1 bis 9 programmiert ist und das Verfahren ausführt, wenn es auf dem Rechengerät (22) ausgeführt wird.

14. Computerprogramm (26) nach Anspruch 13, **dadurch gekennzeichnet, dass** das Computerprogramm (26) als eine auf einem Smartphone (20) ausführbare App ausgebildet ist.
